# EUROPÄISCHE PATENTSCHRIFT

(11) **EP 3 571 103 B1**
(45) Veröffentlichungstag und Bekanntmachung des Hinweises auf die Patenterteilung: **21.09.2022**
(21) Anmeldenummer: 18701401.4
(22) Anmeldetag: 08.01.2018
(51) Int. Cl.: B60T 8/32

(54) **REKUPERATIVES BREMSSYSTEM FÜR EIN FAHRZEUG UND VERFAHREN ZUM BETREIBEN EINES REKUPERATIVEN BREMSSYSTEMS EINES FAHRZEUGS**
REGENERATIVE BRAKING SYSTEM FOR A VEHICLE AND METHOD FOR OPERATING A REGENERATIVE BRAKING SYSTEM OF A VEHICLE
SYSTÈME DE FREINAGE À RÉCUPÉRATION POUR UN VÉHICULE ET PROCÉDÉ PERMETTANT DE FAIRE FONCTIONNER UN SYSTÈME DE FREINAGE À RÉCUPÉRATION D'UN VÉHICULE

(30) Priorität: 18.01.2017 DE 102017200707
(43) Veröffentlichungstag der Anmeldung: 27.11.2019
(73) Patentinhaber: Robert Bosch GmbH, 70442 Stuttgart (DE)
(72) Erfinder: BAUER, Gottfried, 70191 Stuttgart (DE); OVERZIER, Frank, 75233 Tiefenbronn (DE); BODMANN, Jochen, 71720 Oberstenfeld (DE); STEPHAN, Thilo, 74080 Heilbronn (DE); LAIBLE, Ulrich, 71640 Ludwigsburg (DE)
(86) Internationale Anmeldenummer: PCT/EP2018/050312
(87) Internationale Veröffentlichungsnummer: WO 2018/134065

(56) Entgegenhaltungen:
- WO-A1-2015/028858
- JP-A- 2015 020 446
- JP-A- 2015 080 325
- US-A1- 2016 159 224

## Beschreibung

Die Erfindung betrifft ein rekuperatives Bremssystem für ein Fahrzeug. Des Weiteren betrifft die Erfindung ein Verfahren zum Betreiben eines rekuperatives Bremssystems eines Fahrzeugs.

### Stand der Technik

In der DE 196 04 134 A1 sind ein Verfahren und eine Vorrichtung zur Steuerung einer Bremsanlage eines Kraftfahrzeugs mit einem elektrischen Antrieb beschrieben. Bei einem Abbremsen des Fahrzeugs unter Einsatz des elektrischen Antriebs zum gleichzeitigen Aufladen einer Batterie soll das von dem mindestens einen Radbremszylinder der hydraulischen Bremsanlage auf mindestens ein Rad ausgeübte hydraulische Bremsmoment trotz einer Betätigung des Bremspedals reduziert/deaktiviert werden. Dazu soll dem durch die Betätigung des Bremspedals aus dem Hauptbremszylinder zu den Radbremsen verschobenen Druckmittel entgegengewirkt werden, indem durch Öffnen der Auslassventile der hydraulischen Bremsanlage das aus dem Hauptbremszylinder verschobene Druckmittel über den mindestens einen Radbremszylinder in mindestens eine Speicherkammer überführt wird. Auf diese Weise soll eine von dem elektrischen Antrieb ausgeführte regenerative Abbremsung verblendbar sein.

Des Weiteren beschreibt die US 2016/159224 A1 eine Steuervorrichtung für ein Fahrzeugbremssystem und ein mittels der Steuervorrichtung ausführbares Verfahren zum Betreiben des Fahrzeugbremssystems. Die Steuervorrichtung ist während einer Betätigung eines an einem Hauptbremszylinder des Fahrzeugbremssystems angebundenen Bremsbetätigungselements dazu ausgelegt, zu ermitteln, ob ein rekuperativer Modus des Fahrzeugbremssystems aktuell ausführbar ist, oder ob eine aktuelle Ausführbarkeit des rekuperativen Modus des Fahrzeugbremssystems zumindest zeitweise verzögert oder unterbrochen ist.

### Offenbarung der Erfindung

Die Erfindung schafft ein rekuperatives Bremssystem für ein Fahrzeug mit den Merkmalen des Anspruchs 1 und ein Verfahren zum Betreiben eines rekuperatives Bremssystems eines Fahrzeugs mit den Merkmalen des Anspruchs 6.

### Vorteile der Erfindung

Die vorliegende Erfindung schafft Möglichkeiten zum Überbrücken von Situationen, in welchen der zum Aufladen mindestens einer Fahrzeugbatterie bevorzugte rekuperative Modus des jeweiligen Bremssystems kurzzeitig nicht ausführbar ist. Dabei berücksichtigt die vorliegende Erfindung, dass derartige Situationen zu Beginn oder während einer Bremsung häufig auftreten, in der Regel jedoch nur zu einer um ein Zeitintervall von höchstens zwei Sekunden verzögerten oder unterbrochenen aktuellen Ausführbarkeit des rekuperativen Modus des Bremssystems führen. Für ein derartiges relativ kurzes Zeitintervall ermöglicht die vorliegende Erfindung eine Steigerung zumindest der mittels der ersten Radbremszylinder der zwei Bremskreise des jeweiligen Bremssystems bewirkten ersten hydraulischen Fahrzeugverzögerung, so dass ein kurzzeitiger Wegfall der Bremswirkung des Elektromotors verlässlich kompensierbar ist. Der Fahrer eines die vorliegende Erfindung nutzenden Fahrzeugs bemerkt deshalb die Verzögerung oder Unterbrechung des rekuperativen Modus des Bremssystems nicht/kaum. Die vorliegende Erfindung trägt damit dazu bei, eine Akzeptanz von Rekuperation, und damit auch eine Akzeptanz von Hybrid- und Elektrofahrzeugen, bei Fahrern zu steigern. Somit trägt die vorliegende Erfindung auch dazu bei, Fahrer zum Kauf eines umweltfreundlicheren Fahrzeugtyps anzuregen.

Da die Steuervorrichtung dazu ausgelegt ist, zu ermitteln, ob eine Kupplung des Fahrzeugs geöffnet ist, ob eine Zwischenzeit zwischen einer Betätigung eines Fahrpedals des Fahrzeugs und der nachfolgenden Betätigung des Bremsbetätigungselements unter einer vorgegebenen Mindestzeit liegt, ob eine aktuelle Geschwindigkeit des Fahrzeugs über einer Höchstgeschwindigkeit, bis zu welcher der rekuperative Modus des Bremssystems ausführbar ist, liegt, und/oder ob ein Gangwechsel ausgeführt wird, und gegebenenfalls festzustellen, dass eine aktuelle Ausführbarkeit des rekuperativen Modus des Bremssystems für ein Zeitintervall von höchstens zwei Sekunden verzögert oder unterbrochen ist, ist ein schnelles und verlässliches Feststellen von lediglich kurzzeitigen Verzögerungen oder Unterbrechungen des bevorzugten rekuperativen Betriebs des Bremssystems ermöglicht.

In einer vorteilhaften Ausführungsform des rekuperativen Bremssystems ist die Steuervorrichtung, sofern eine aktuelle Ausführbarkeit des rekuperativen Modus des Bremssystems für ein Zeitintervall von höchstens zwei Sekunden verzögert oder unterbrochen ist, dazu ausgelegt, zumindest die Ventile der zwei Bremskreise derart anzusteuern, dass, zumindest sofern die angeforderte Soll-Fahrzeugverzögerung unter einer vorgegebenen Grenzverzögerung liegt, die mittels der ersten Radbremszylinder der zwei Bremskreise bewirkte erste hydraulische Fahrzeugverzögerung auf die Soll-Fahrzeugverzögerung steigerbar ist, während ein Bremsdruck in jedem zweiten Radbremszylinder der zwei Bremskreise höchstens gleich dem Ansprechdruck der Speicherkammer des jeweiligen Bremskreises ist. Damit kann jeder zweite Radbremszylinder der zwei Bremskreise nach der Verzögerung oder Unterbrechung des rekuperativen Modus des Bremssystems problemlos zum (geregelten) Druckabbau in dem jeweiligen Bremskreis (inklusive in dessen ersten Radbremszylinder) genutzt werden. Insbesondere kann mit der Nutzung der zweiten Radbremszylinder der zwei Bremskreise begonnen werden, ohne dass zuvor Bremsflüssigkeit über ein den jeweiligen zweiten Radbremszylinder zugeordnetes zweites Radauslassventil abzulassen ist. Damit tritt auch kein plötzlicher Bremsdruckabfall, welcher bei einem Ablassen von Bremsflüssigkeit aus jedem zweiten Radbremszylinder über das jeweils zugeordnete zweite Radauslassventil der Fall wäre, auf. Wie unten genauer erläutert wird, trägt diese Ausführungsform des rekuperativen Bremssystems deshalb zur Steigerung eines Bremskomforts für den Fahrer bei.

Beispielsweise kann, sofern eine aktuelle Ausführbarkeit des rekuperativen Modus des Bremssystems für ein Zeitintervall von höchstens zwei Sekunden verzögert oder unterbrochen ist, die Steuervorrichtung dazu ausgelegt sein, zumindest die Ventile der zwei Bremskreise derart anzusteuern, dass, sofern die angeforderte Soll-Fahrzeugverzögerung über der vorgegebenen Grenzverzögerung liegt, auch der Bremsdruck in jedem zweiten Radbremszylinder der zwei Bremskreise über den Ansprechdruck der Speicherkammer des jeweiligen Bremskreises steigerbar ist und eine Summe der mittels der ersten Radbremszylinder der zwei Bremskreise bewirkten ersten hydraulischen Fahrzeugverzögerung und einer mittels der zweiten Radbremszylinder der zwei Bremskreise bewirkten zweiten hydraulischen Fahrzeugverzögerung auf die Soll-Fahrzeugverzögerung steigerbar ist. Mittels dieser Vorgehensweise kann durch Vermeidung einer Unterbremsung des Fahrzeugs vergleichsweise schnell ein Stillstand des Fahrzeugs bewirkt werden.

Alternativ kann die Steuervorrichtung, sofern eine aktuelle Ausführbarkeit des rekuperativen Modus des Bremssystems für ein Zeitintervall von höchstens zwei Sekunden verzögert oder unterbrochen ist, auch dazu ausgelegt sein, zumindest die Ventile der zwei Bremskreise derart anzusteuern, dass zumindest ein Bremsdruck in jedem ersten Radbremszylinder der zwei Bremskreise auf einen von dem Fahrer in dem Hauptbremszylinder bewirkten Einbremsdruck steigerbar ist. Ein derartiger Verblendvorgang wird von dem Fahrer in der Regel nicht bemerkt.

Vorzugsweise sind die ersten Radbremszylinder der zwei Bremskreise einer Vorderachse des Fahrzeugs und die zweiten Radbremszylinder der zwei Bremskreise einer Hinterachse des Fahrzeugs zugeordnet. Es ist vorteilhaft, mittels einiger der oben beschriebenen Ausführungsformen einen Fahrerbremswunsch allein durch einen Druckaufbau an der Vorderachse umzusetzen, da der dazu benötigte erste Bremsdruck in den ersten Radbremszylindern in der Regel kleiner oder nur wenig größer als ein Grenzdruck, ab welchem ein Jump-In-Bereich überschritten wird, ist.

Die vorausgehend beschriebenen Vorteile werden auch durch ein Ausführen eines korrespondierenden Verfahrens zum Betreiben eines rekuperativen Bremssystems eines Fahrzeugs geschaffen. Es wird ausdrücklich darauf hingewiesen, dass das Verfahren zum Betreiben eines rekuperativen Bremssystems eines Fahrzeugs gemäß den oben beschriebenen Ausführungsformen des rekuperativen Bremssystems weiterbildbar ist.

### Kurze Beschreibung der Zeichnungen

Weitere Merkmale und Vorteile der vorliegenden Erfindung werden nachfolgend anhand der Figuren erläutert. Es zeigen:
- Fig. 1a und 1b: Koordinatensysteme zum Erläutern einer ersten Ausführungsform des Verfahrens zum Betreiben eines rekuperativen Bremssystems eines Fahrzeugs;
- Fig. 2a und 2b: Koordinatensysteme zum Erläutern einer zweiten Ausführungsform des Verfahrens zum Betreiben eines rekuperativen Bremssystems eines Fahrzeugs;
- Fig. 3a und 3b: Koordinatensysteme zum Erläutern einer dritten Ausführungsform des Verfahrens zum Betreiben eines rekuperativen Bremssystems eines Fahrzeugs;
- Fig. 4a und 4b: Koordinatensysteme zum Erläutern einer vierten Ausführungsform des Verfahrens zum Betreiben eines rekuperativen Bremssystems eines Fahrzeugs;
- Fig. 5: ein Koordinatensystem zum Erläutern einer fünften Ausführungsform des Verfahrens zum Betreiben eines rekuperativen Bremssystems eines Fahrzeugs;
- Fig. 6: ein Koordinatensystem zum Erläutern einer sechsten Ausführungsform des Verfahrens zum Betreiben eines rekuperativen Bremssystems eines Fahrzeugs; und
- Fig. 7: eine schematische Darstellung einer Ausführungsform des rekuperativen Bremssystems.

### Ausführungsformen der Erfindung

Es wird ausdrücklich darauf hingewiesen, dass eine Ausführbarkeit der im Weiteren beschriebenen Verfahren zum Betreiben eines rekuperativen Bremssystems eines Fahrzeugs weder auf eine bestimmte Ausbildung des jeweiligen Bremssystems noch auf einen speziellen Fahrzeugtyp/Kraftfahrzeugtyp des jeweiligen Fahrzeugs/Kraftfahrzeugs beschränkt ist. Stattdessen sind die im Weiteren beschriebenen Verfahren mit (nahezu) jedem Bremssystem ausführbar, welches zumindest einen Hauptbremszylinder, einen (zum Abbremsen des Fahrzeugs/Kraftfahrzeugs einsetzbaren) Elektromotor und zwei Bremskreise mit zumindest je einem ersten Radbremszylinder, je einem zweiten Radbremszylinder, je einer Speicherkammer und je mindestens einem Ventil umfasst. (Unter dem Elektromotor des Bremssystems kann auch ein zusätzlich zum Abbremsen des Fahrzeugs/Kraftfahrzeugs einsetzbarer Antriebsmotor verstanden werden.) Auch eine Verwendbarkeit des unten beschriebenen rekuperativen Bremssystems für ein Fahrzeug/Kraftfahrzeug ist nicht auf einen bestimmten Fahrzeugtyp/Kraftfahrzeugtyp limitiert. Die wiedergegebene Ausbildung des rekuperativen Bremssystems ist lediglich beispielhaft zu interpretieren.

Bevorzugter Weise wird zum Ausführen der im Weiteren beschriebenen Verfahren oder Anwenden des unten beschriebenen rekuperativen Bremssystems ein Fahrzeug/Kraftfahrzeug mit einer X-Bremskreisaufteilung eingesetzt. In diesem Fall sind die ersten Radbremszylinder der zwei Bremskreise einer ersten Fahrzeugachse zugeordnet, während die zweiten Radbremszylinder der zwei Bremskreise einer anderen/zweiten Fahrzeugachse zugeordnet sind. Vorzugsweise sind die ersten Radbremszylinder der zwei Bremskreise einer Vorderachse zugeordnet, während die zweiten Radbremszylinder der zwei Bremskreise einer Hinterachse zugeordnet sind. (Sofern die ersten Radbremszylinder der zwei Bremskreise der Vorderachse und die zweiten Radbremszylinder der zwei Bremskreise der Hinterachse zugeordnet sind, bewirkt ein aufgebauter Bremsdruck in den ersten Radbremszylinder der zwei Bremskreise eine erste hydraulische Fahrzeugverzögerung der ersten Radbremszylinder, welche um einen Faktor 2 gegenüber einer bei dem gleichen Bremsdruck in den zweiten Radbremszylinder der zwei Bremskreise mittels der zweiten Radbremszylinder bewirkten zweiten hydraulischen Fahrzeugverzögerung gesteigert ist.) Eine Verwendbarkeit der im Weiteren beschriebenen Technologien ist jedoch nicht auf eine X-Bremskreisaufteilung beschränkt.

Vorzugsweise ist an dem jeweiligen rekuperativen Bremssystem auch ein Jump-In-Bereich ausgebildet, d.h. dass zu Beginn einer Betätigung eines Bremsbetätigungselements/Bremspedals durch einen Fahrer ein Leerweg vorliegt. In diesem Fall liegt erst ab einem Überwinden des Jump-In-Bereichs, wenn der Leerweg geschlossen ist, eine mechanische Kopplung zwischen dem Bremsbetätigungselement/Bremspedal und mindestens einem verstellbaren Kolben des Hauptbremszylinders des Bremssystems vor. Damit spürt der Fahrer auch erst nach einem Überwinden des Jump-In-Bereichs eine mechanische Rückwirkung des Bremssystems.

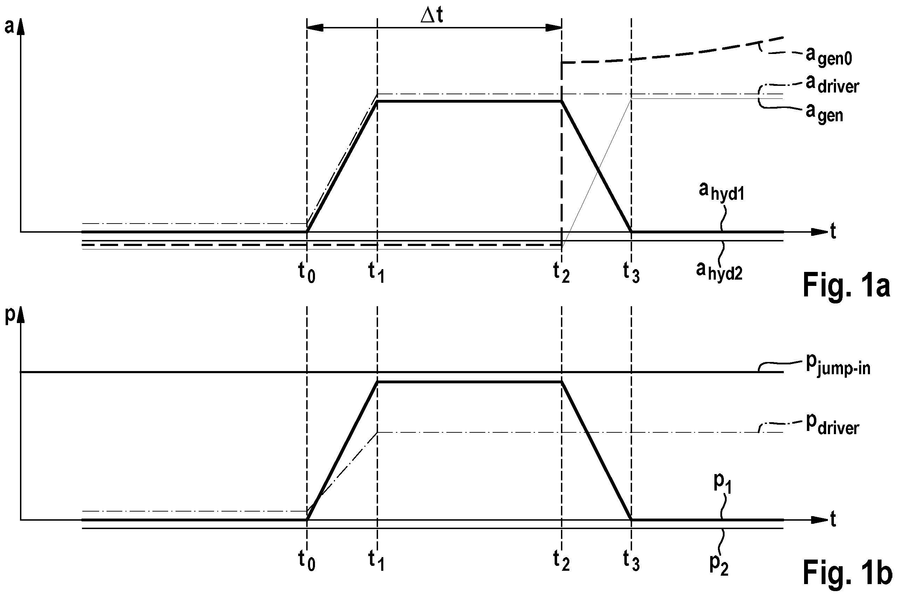

Fig. 1a und 1b zeigen Koordinatensysteme zum Erläutern einer ersten Ausführungsform des Verfahrens zum Betreiben eines rekuperativen Bremssystems eines Fahrzeugs. Eine Zeitachse t dient in den Koordinatensystemen der Fig. 1a und 1b als Abszisse, während mittels einer Ordinate des Koordinatensystems der Fig. 1a eine Verzögerung a und mittels einer Ordinate des Koordinatensystems der Fig. 1b ein Druck p wiedergegeben sind.

Ab einer Zeit t₀ betätigt ein Fahrer des Fahrzeugs das an dem Hauptbremszylinder des Bremssystems angebundene Bremsbetätigungselement/Bremspedal zur Vorgabe einer Soll-Fahrzeugverzögerung a_{driver}. Während der Betätigung des Bremsbetätigungselements/Bremspedals durch den Fahrer (d.h. ab der Zeit t₀) wird (fortlaufend) ermittelt, ob ein rekuperativer Modus des Bremssystems aktuell ausführbar ist, in welchem (ausschließlich) mittels eines generatorischen Betriebs des Elektromotors des Bremssystems eine generatorische Fahrzeugverzögerung a_{gen} gleich der angeforderten Soll-Fahrzeugverzögerung a_{driver} bewirkbar ist/bewirkt wird. Zusätzlich wird ermittelt, ob eine aktuelle Ausführbarkeit des rekuperativen Modus des Bremssystems für ein Zeitintervall Δt von höchstens zwei Sekunden, insbesondere für ein Zeitintervall Δt von höchstens einer Sekunde, verzögert oder unterbrochen ist.

Um zu ermitteln, ob eine aktuelle Ausführbarkeit des rekuperativen Modus des Bremssystems zu Beginn einer Bremsung (d.h. zu der Zeit t₀) für ein Zeitintervall Δt von höchstens zwei Sekunden verzögert ist, wird ermittelt, ob eine Kupplung des Fahrzeugs geöffnet ist, ob eine Zwischenzeit zwischen einer Betätigung eines Fahrpedals des Fahrzeugs und der nachfolgenden Betätigung des Bremsbetätigungselements unter einer vorgegebenen Mindestzeit liegt und/oder ob eine aktuelle Geschwindigkeit des Fahrzeugs über einer Höchstgeschwindigkeit liegt, bis zu welcher der generatorische Betrieb des Elektromotors ausführbar ist. Sofern eine in diesem Absatz genannte Situation vorliegt, kann verlässlich festgestellt werden, dass eine aktuelle Ausführbarkeit des rekuperativen Modus des Bremssystems für ein Zeitintervall Δt von höchstens zwei Sekunden verzögert ist.

Beispielsweise wird bei Fahrzeugen mit einem BR-System (Boost Recuperation System) die Kupplung bei einem unbetätigten Gaspedal und einem unbetätigten Bremsbetätigungselement/Bremspedal geöffnet, um ein mögliches Schleppmoment (bewirkt durch einen Antriebsstrang des Fahrzeugs) zu unterdrücken und ein "Segeln" des Fahrzeugs zu ermöglichen. Vor einer Ausführbarkeit des rekuperativen Modus des Bremssystems ist deshalb die Kupplung erst zu schließen, was jedoch nur eine verzögerte Ausführbarkeit des rekuperativen Modus des Bremssystems von einigen hundert Millisekunden auslöst. Ebenso kann es bei einem schnellen Wechsel von dem Fahrpedal auf das Bremsbetätigungselement/Bremspedal einige hundert Millisekunden dauern, bis der rekuperative Modus des Bremssystems ausführbar ist. Des Weiteren ist zu Beginn einer Bremsung bei einer aktuellen Geschwindigkeit des Fahrzeugs über der Höchstgeschwindigkeit der Elektromotor oft nur eingeschränkt zum Abbremsen des Fahrzeugs einsetzbar (und deshalb der rekuperative Modus des Bremssystems nicht ausführbar), was jedoch innerhalb eines Zeitintervalls Δt von höchstens zwei Sekunden durch Abnahme der aktuellen Geschwindigkeit des Fahrzeugs behebbar ist.

In dem Beispiel der Fig. 1a und 1b wird zur Zeit to festgestellt, dass eine aktuelle Ausführbarkeit des rekuperativen Modus des Bremssystems für ein Zeitintervall Δt von höchstens zwei Sekunden verzögert ist. (Beispielhaft ist eine mittels des generatorischen Betriebs des Elektromotors maximal ausführbare Fahrzeugverzögerung a_{gen0} während des Zeitintervalls Δt gleich Null.) Deshalb werden zumindest die Ventile der zwei Bremskreise des Bremssystems zur Zeit t₀ derart angesteuert, dass zumindest eine (ausschließlich) mittels der ersten Radbremszylinder der zwei Bremskreise bewirkte erste hydraulische Fahrzeugverzögerung a_{hyd1} gesteigert wird. Speziell werden bei der hier beschriebenen Ausführungsform zumindest die Ventile der zwei Bremskreise derart angesteuert, dass die mittels der ersten Radbremszylinder der zwei Bremskreise bewirkte erste hydraulische Fahrzeugverzögerung a_{hyd1} auf die Soll-Fahrzeugverzögerung a_{driver} gesteigert wird.

Sofern die zwei Bremskreise je ein ihrem ersten Radbremszylinder zugeordnetes erstes Radeinlassventil, je ein ihrem ersten Radbremszylinder zugeordnetes erstes Radauslassventil, je ein ihrem zweiten Radbremszylinder zugeordnetes zweites Radeinlassventil und je ein ihrem zweiten Radbremszylinder zugeordnetes zweites Radauslassventil aufweisen, können zur Zeit to die den ersten Radbremszylindern der zwei Bremskreise zugeordneten ersten Radeinlassventile in einen offenen Zustand, die den ersten Radbremszylindern der zwei Bremskreise zugeordneten ersten Radauslassventile in einen geschlossenen Zustand, die den zweiten Radbremszylindern der zwei Bremskreise zugeordneten zweiten Radeinlassventile lediglich zeitweise in einen offenen Zustand und die den zweiten Radbremszylindern der zwei Bremskreise zugeordneten zweiten Radauslassventile in einen offenen Zustand gesteuert werden. Auf diese Weise kann ein erster Bremsdruck p1 in den ersten Radbremszylindern der zwei Bremskreise bewirkt werden, welcher der Soll-Fahrzeugverzögerung a_{driver} entspricht. Über ein Ablassen von Bremsflüssigkeit über die zweiten Radbremszylinder der zwei Bremskreise in die Speicherkammern (durch das zeitweise Öffnen der den zweiten Radbremszylindern zugeordneten zweiten Radeinlassventile und Offenhalten der den zweiten Radbremszylindern zugeordneten zweiten Radauslassventile) kann der erste Bremsdruck p1 in den ersten Radbremszylindern reduziert werden. Eventuell kann auch mindestens eine Pumpe pro Bremskreis zur Steigerung des ersten Bremsdrucks p1 in den ersten Radbremszylindern eingesetzt werden. Insbesondere kann der erste Bremsdruck p1 in den ersten Radbremszylindern über einem von dem Fahrer in dem Hauptbremszylinder bewirkten Einbremsdruck p_{driver} liegen. Man spricht dabei von einer Überbremsung der ersten Radbremszylinder, bzw. einer den ersten Radbremszylindern zugeordneten ersten Achse des Fahrzeugs (vorzugsweise der Vorderachse). Da die den zweiten Radbremszylindern der zwei Bremskreise zugeordneten zweiten Radauslassventile in einen offenen Zustand gesteuert werden, ist ein zweiter Bremsdruck p2 in jedem zweiten Radbremszylinder der zwei Bremskreise höchstens gleich einem Ansprechdruck der Speicherkammer des jeweiligen Bremskreises. Eine (ausschließlich) mittels der zweiten Radbremszylinder der zwei Bremskreise bewirkte zweite hydraulische Fahrzeugverzögerung a_{hyd2} bleibt somit ab der Zeit t₀ (nahezu) gleich Null.

Bei dem Ausführungsbeispiel der Fig. 1a und 1b fordert der Fahrer zwischen den Zeiten t₀ und t₁ eine stetig steigernde Soll-Fahrzeugverzögerung a_{driver} an, welche ab der Zeit t₁ konstant bleibt. Allerdings bremst der Fahrer lediglich innerhalb des Jump-in-Bereichs, weshalb der Einbremsdruck p_{driver} des Fahrers kleiner als ein Grenzdruck pⱼᵤₘₚ₋ᵢₙ bleibt (ab welchem der Jump-in-Bereich verlassen wird).

Ab einer Zeit t₂ ist der rekuperative Modus des Bremssystems ausführbar. Deshalb wird zwischen den Zeiten t₂ und t₃ der Elektromotor so angesteuert, dass die mittels des Elektromotors bewirkte generatorische Fahrzeugverzögerung a_{gen} auf die Soll-Fahrzeugverzögerung a_{driver} gesteigert wird. Gleichzeitig wird während der Zeiten t₂ und t₃ ein geregelter Bremsdruckabbau in den ersten Radbremszylindern der zwei Bremskreise ausgeführt, wodurch die mittels der ersten Radbremszylinder bewirkte erste hydraulische Fahrzeugverzögerung a_{hyd1} auf (nahezu) Null reduziert wird. Da zur Zeit t₂ der zweite Bremsdruck p2 in den zweiten Radbremszylinder der zwei Bremskreise höchstens gleich dem Ansprechdruck der Speicherkammer des jeweiligen Bremskreises ist, kann über die zweiten Radbremszylinder Bremsflüssigkeit so in die Speicherkammern verschoben werden, dass eine Abnahme der ersten hydraulischen Fahrzeugverzögerung a_{hyd1} einer gleichzeitigen Zunahme der mittels des Elektromotors bewirkten generatorischen Fahrzeugverzögerung a_{gen} entspricht. Die zwischen den Zeiten t₂ und t₃ ausgeführten Verblendvorgänge führen deshalb nicht zu Verzögerungsschwankungen und die Soll-Fahrzeugverzögerung a_{driver} wird auch zwischen den Zeiten t₂ und t₃ verlässlich eingehalten.

Ab der Zeit t₃ wird, solange der rekuperative Modus des Bremssystems ausführbar ist, der Elektromotor derart angesteuert, dass die generatorische Fahrzeugverzögerung a_{gen} gleich der angeforderten Soll-Fahrzeugverzögerung a_{driver} bewirkt wird. Außerdem werden ab der Zeit t₃ die Ventile der zwei Bremskreise derart angesteuert, dass aus dem Hauptbremszylinder verschobene Bremsflüssigkeit in die Speicherkammern der zwei Bremskreise verschoben wird/bleibt und die Bremsdrücke p1 und p2 in den Radbremszylindern der zwei Bremskreise höchstens gleich dem Ansprechdruck der Speicherkammer des jeweiligen Bremskreises sind. Vorzugsweise werden dazu alle ersten und zweiten Radauslassventile in einen geöffneten Zustand gesteuert.

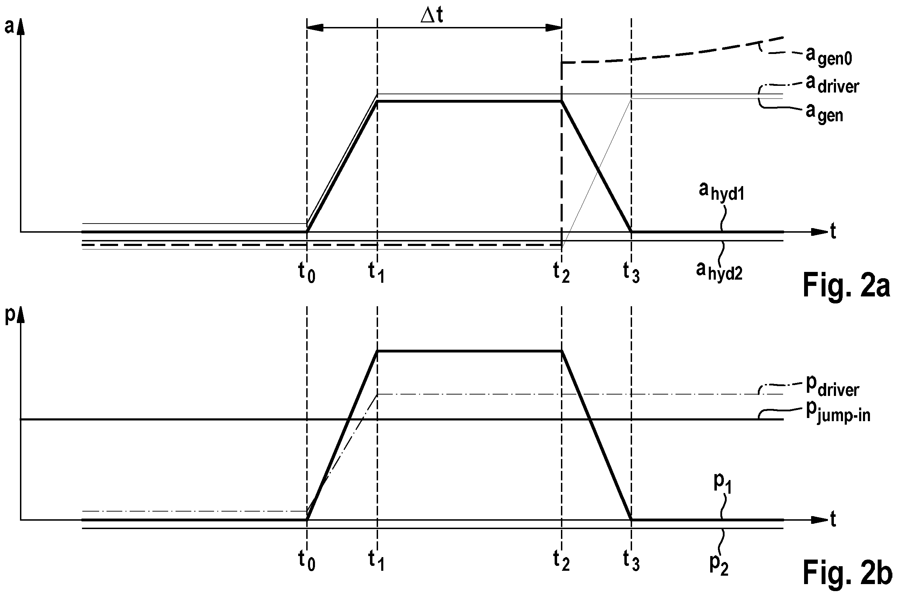

Fig. 2a und 2b zeigen Koordinatensysteme zum Erläutern einer zweiten Ausführungsform des Verfahrens zum Betreiben eines rekuperativen Bremssystems eines Fahrzeugs. (Bezüglich der Abszissen und Ordinaten der Koordinatensysteme der Fig. 2a und 2b wird auf die Erläuterung zu den Koordinatensystemen der Fig. 1a und 1b verwiesen.)

Das Verfahren der Fig. 2a und 2b unterscheidet sich von der zuvor beschriebenen Ausführungsform lediglich darin, dass der Fahrer zwischen den Zeiten t₀ und t₁ bei der Betätigung des Bremsbetätigungselements zur Vorgabe der Soll-Fahrzeugverzögerung a_{driver} über den Jump-in-Bereich hinausbremst. Aufgrund des geschlossenen Leerwegs führt die Überbremsung der ersten Radbremszylinder (bzw. der den ersten Radbremszylindern zugeordneten Achse) deshalb zu einem "steiferen Bremsbetätigungselement/steiferen Bremspedal", was der Fahrer aufgrund der kurzen Dauer des Zeitintervalls Δt jedoch nicht/kaum bemerkt. Sofern das Bremssystem mit einem dem Hauptbremszylinder vorgelagerten elektromechanischen Bremskraftverstärker ausgestattet ist, kann mittels einer Anpassung eines Betriebs des elektromechanischen Bremskraftverstärkers die Überbremsung der ersten Radbremszylinder zumindest teilweise so kompensiert werden, dass der Fahrer auch während des Zeitintervalls Δt ein standardgemäßes Bremsbetätigungsgefühl/Pedalgefühl hat.

Bezüglich weiterer Verfahrensschritte der Ausführungsform der Fig. 2a und 2b wird auf das Verfahren der Fig. 1a und 1b verwiesen.

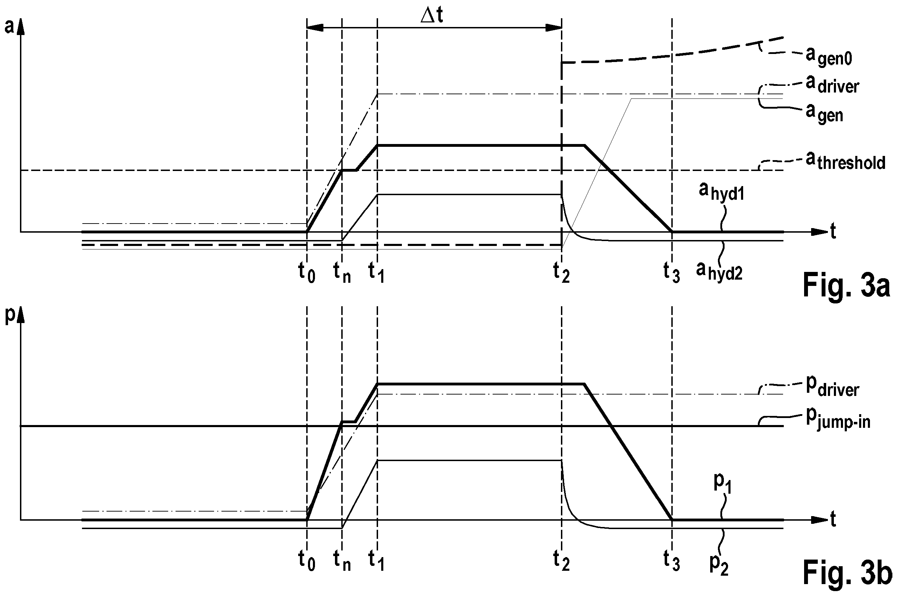

Fig. 3a und 3b zeigen Koordinatensysteme zum Erläutern einer dritten Ausführungsform des Verfahrens zum Betreiben eines rekuperativen Bremssystems eines Fahrzeugs. (Bezüglich der Abszissen und Ordinaten der Koordinatensysteme der Fig. 3a und 3b wird auf die Erläuterung zu den Koordinatensystemen der Fig. 1a und 1b verwiesen.)

Bei der mittels der Fig. 3a und 3b dargestellten Ausführungsform werden, sofern eine aktuelle Ausführbarkeit des rekuperativen Modus des Bremssystems für ein Zeitintervall Δt von höchstens zwei Sekunden verzögert oder unterbrochen ist, zumindest die Ventile der zwei Bremskreise derart angesteuert, dass, sofern die angeforderte Soll-Fahrzeugverzögerung a_{driver} unter einer vorgegebenen Grenzverzögerung a_{threshold} liegt, die mittels der ersten Radbremszylinder der zwei Bremskreise bewirkte erste hydraulische Fahrzeugverzögerung a_{hyd1} auf die Soll-Fahrzeugverzögerung a_{driver} gesteigert wird, während der zweite Bremsdruck p2 in jedem zweiten Radbremszylinder der zwei Bremskreise höchstens gleich dem Ansprechdruck der Speicherkammer des jeweiligen Bremskreises ist/bleibt. Außerdem werden, sofern eine aktuelle Ausführbarkeit des rekuperativen Modus des Bremssystems für ein Zeitintervall Δt von höchstens zwei Sekunden verzögert oder unterbrochen ist und die angeforderte Soll-Fahrzeugverzögerung a_{driver} über der vorgegebenen Grenzverzögerung a_{threshold} liegt, zumindest die Ventile der zwei Bremskreise derart angesteuert, dass auch der zweite Bremsdruck p2 in jedem zweiten Radbremszylinder der zwei Bremskreise über den Ansprechdruck der Speicherkammer des jeweiligen Bremskreises gesteigert wird und eine Summe der mittels der ersten Radbremszylinder der zwei Bremskreise bewirkten ersten hydraulischen Fahrzeugverzögerung a_{hyd1} und der mittels der zweiten Radbremszylinder der zwei Bremskreise bewirkten zweiten hydraulischen Fahrzeugverzögerung a_{hyd2} auf die Soll-Fahrzeugverzögerung a_{driver} gesteigert wird.

Beispielhaft ist die vorgegebene Grenzverzögerung a_{threshold} eine Verzögerung, ab welcher der Jump-In-Bereich überschritten ist (und der Einbremsdruck p_{driver} des Fahrers gleich dem Grenzdruck pⱼᵤₘₚ₋ᵢₙ ist). Zu einer Zeit tn zwischen den Zeiten t₀ und t₁ übersteigt die Soll-Fahrzeugverzögerung a_{driver} die vorgegebene Grenzverzögerung a_{threshold}. Deshalb werden ab der Zeit tₙ die zweiten Radeinlassventile der zweiten Radbremszylinder der zwei Bremskreise geöffnet und die zweiten Radauslassventile der zweiten Radbremszylinder der zwei Bremskreise geschlossen. Aufgrund des zusätzlichen Bremsdruckaufbaus in den zweiten Radbremszylindern der zwei Bremskreise ist eine Überbremsung der ersten Radbremszylinder nicht notwendig, und dem Fahrer kann ein standardgemäßeres Bremsbetätigungsgefühl/Pedalgefühl geboten werden. Vorzugsweise werden, sofern eine aktuelle Ausführbarkeit des rekuperativen Modus des Bremssystems für ein Zeitintervall Δt von höchstens zwei Sekunden verzögert oder unterbrochen ist und die angeforderte Soll-Fahrzeugverzögerung a_{driver} über der vorgegebenen Grenzverzögerung a_{threshold} liegt, zumindest die Ventile der zwei Bremskreise derart angesteuert, dass der erste Bremsdruck p1 in den ersten Radbremszylindern der zwei Bremskreise um mindestens einen Faktor 1,5, vorzugsweise um mindestens einen Faktor 2, größer als der zweite Bremsdruck p2 in den zweiten Radbremszylindern der zwei Bremskreise bleibt. (Auf diese Weise können Verzögerungsschwankungen beim Druckabbau in den zweiten Radbremszylindern minimiert werden.)

Ab der Zeit t₂, wenn die verzögerte Ausführbarkeit des rekuperativen Modus des Bremssystems überwunden ist, wird der zweite Bremsdruck p2 in den zweiten Radbremszylindern durch Öffnen der zweiten Radauslassventile abgebaut. Ein derartiger Druckabbau erfolgt zwar vergleichsweise schnell und kann deshalb nicht immer mittels der gleichzeitig ausgeführten Steigerung der generatorischen Fahrzeugverzögerung a_{gen} des Elektromotors kompensiert werden. Dennoch bemerkt der Fahrer kaum Verzögerungsschwankungen, da nur ein relativ geringer zweiter Bremsdruck p2 in den zweiten Radbremszylindern der zwei Bremskreise abzubauen ist. Insbesondere kann in einer Weiterbildung des Verfahrens der zweite Bremsdruck p2 mit einem Vergleichsdruck verglichen werden, wobei ein Druckabbau in den zweiten Radbremszylindern nur dann während einer Bremsung ausgeführt wird, wenn aufgrund des Vergleichs erkennbar ist, dass der zweite Bremsdruck p2 unter dem Vergleichsdruck liegt und somit für den Fahrer nach dem Öffnen der zweiten Radauslassventile kaum Verzögerungsschwankungen wahrnehmbar sind. Als zusätzliche Alternative ist es auch möglich, den Druckaufbau in den zweiten Radbremszylindern auf einen Maximaldruck zu begrenzen, dessen Abbau zu keiner für den Fahrer störenden Verringerung der Fahrzeugverzögerung führt.

Bezüglich weiterer Verfahrensschritte der Ausführungsform der Fig. 3a und 3b wird auf das Verfahren der Fig. 1a und 1b verwiesen.

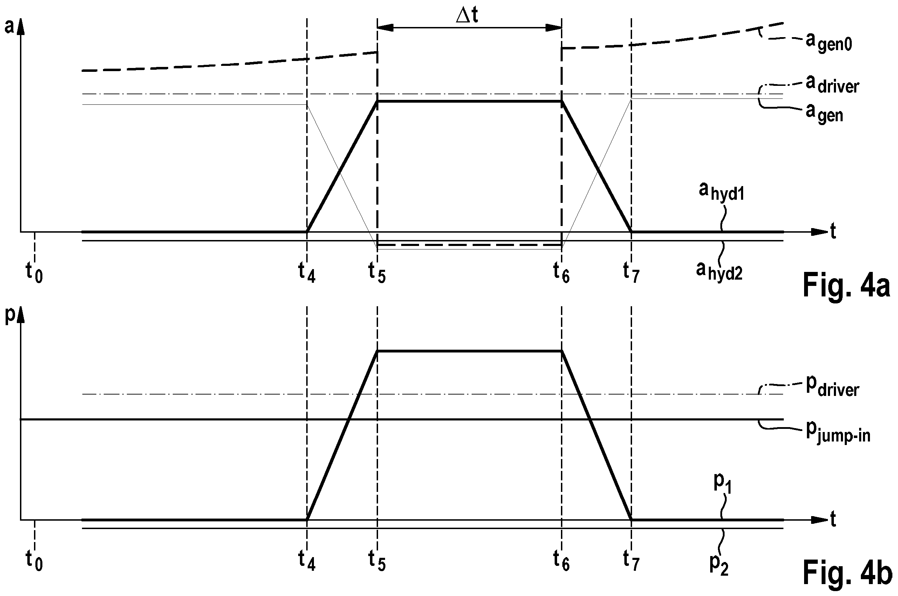

Fig. 4a und 4b zeigen Koordinatensysteme zum Erläutern einer vierten Ausführungsform des Verfahrens zum Betreiben eines rekuperativen Bremssystems eines Fahrzeugs. (Bezüglich der Abszissen und Ordinaten der Koordinatensysteme der Fig. 4a und 4b wird auf die Erläuterung zu den Koordinatensystemen der Fig. 1a und 1b verwiesen.)

Bei dem mittels der Fig. 4a und 4b wiedergegebenen Verfahren wird während des rekuperativen Betriebs des Bremssystems (fortlaufend) ermittelt, ob eine aktuelle Ausführbarkeit des rekuperativen Modus des Bremssystems für ein Zeitintervall Δt von höchstens zwei Sekunden unterbrochen ist. Beispielsweise wird dazu ermittelt, ob ein (lastfreier) Gangwechsel ansteht/ausgeführt wird, und gegebenenfalls wird festgestellt, dass eine aktuelle Ausführbarkeit des rekuperativen Modus des Bremssystems für ein Zeitintervall Δt von höchstens zwei Sekunden unterbrochen ist. Ein Hybridfahrzeug mit Verbrennungs- und Elektromotor weist in der Regel ein Automatikgetriebe auf, welches beim Bremsen einen Gangwechsel nur im lastfreien Zustand ermöglicht. Darum muss häufig während einer Bremsung die mittels des Elektromotors bewirkte generatorische Fahrzeugverzögerung a_{gen} (auf Null) reduziert werden, bevor der Gangwechsel stattfinden kann.

In der Ausführungsform der Fig. 4a und 4b wird zu einer Zeit t₄ erkannt, dass ab der Zeit t₅ eine aktuelle Ausführbarkeit des rekuperativen Modus des Bremssystems für ein Zeitintervall Δt von höchstens zwei Sekunden unterbrochen ist. Deshalb wird zwischen den Zeiten t₄ und t₅ die mittels des Elektromotors bewirkte generatorische Fahrzeugverzögerung a_{gen} von dem Wert der angeforderten Soll-Fahrzeugverzögerung a_{driver} auf (nahezu) Null heruntergefahren. Außerdem werden zwischen den Zeiten t₄ und t₅ zumindest die Ventile der zwei Bremskreise derart angesteuert, dass die mittels der ersten Radbremszylinder der zwei Bremskreise bewirkte erste hydraulische Fahrzeugverzögerung a_{hyd1} auf die Soll-Fahrzeugverzögerung gesteigert wird. Dazu können die ersten Radauslassventile der ersten Radbremszylinder der zwei Bremskreise geschlossenen werden, während die zweiten Radauslassventile der zweiten Radbremszylinder der zwei Bremskreise geöffnet werden/bleiben. Über ein Ablassen von Bremsflüssigkeit über die zweiten Radbremszylinder der zwei Bremskreise in die Speicherkammern (durch das zeitweise Öffnen der den zweiten Radbremszylindern zugeordneten zweiten Radeinlassventile und Offenhalten der den zweiten Radbremszylindern zugeordneten zweiten Radauslassventile) kann der erste Bremsdruck p1 in den ersten Radbremszylindern reduziert werden. Eventuell kann mindestens eine Pumpe pro Bremskreis zur Steigerung des ersten Bremsdrucks p1 in den ersten Radbremszylindern eingesetzt werden. Auf diese Weise kann der erste Bremsdruck p1 in den ersten Radbremszylindern über den Einbremsdruck p_{driver} des Fahrers gesteigert werden. Aufgrund der Kürze des Zeitintervalls Δt bemerkt der Fahrer die Überbremsung der ersten Radbremszylinder jedoch nicht/kaum.

Wenn ab einer Zeit t₆ der rekuperative Modus des Bremssystems wieder ausführbar ist, so wird die mittels des Elektromotors bewirkte generatorische Fahrzeugverzögerung a_{gen} bis zu einer Zeit t₇ auf die angeforderte Soll-Fahrzeugverzögerung a_{driver} gesteigert. Zwischen den Zeiten t₆ und t₇ wird auch der erste Bremsdruck p1 in den ersten Radbremszylindern der zwei Bremskreise (durch Ablassen von Bremsflüssigkeit über die zweiten Radbremszylinder in die Speicherkammern) stetig abgebaut, wodurch das Bremssystem wieder in den bevorzugten rekuperativen Betrieb überführt wird.

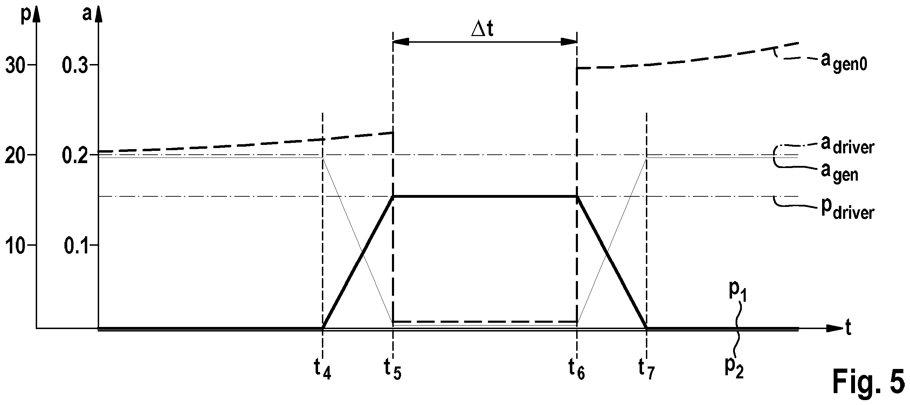

Fig. 5 zeigt ein Koordinatensystem zum Erläutern einer fünften Ausführungsform des Verfahrens zum Betreiben eines rekuperativen Bremssystems eines Fahrzeugs. Die Abszisse des Koordinatensystems der Fig. 5 ist eine Zeitachse t, während mittels der Ordinaten des Koordinatensystems der Fig. 5 eine Verzögerung a (in Meter/Sekunde²) oder ein Druck p (in Bar) wiedergegeben sind.

Bei der hier beschriebenen Ausführungsform werden, sofern eine aktuelle Ausführbarkeit des rekuperativen Modus des Bremssystems für ein Zeitintervall Δt von höchstens zwei Sekunden verzögert oder unterbrochen ist, zumindest die Ventile der zwei Bremskreise derart angesteuert, dass der erste Bremsdruck p1 in jedem ersten Radbremszylinder der zwei Bremskreise auf den Einbremsdruck p_{driver} des Fahrers gesteigert wird, während der zweite Bremsdruck p2 in jedem zweiten Radbremszylinder der zwei Bremskreise höchstens gleich dem Ansprechdruck der Speicherkammer des jeweiligen Bremskreises ist/bleibt. Der Fahrer hat somit auch zwischen den Zeiten t₅ und t₆ ein standardgemäßes Bremsbetätigungsgefühl/Pedalgefühl. Aufgrund der Kürze des Zeitintervalls Δt bemerkt der Fahrer außerdem die Unterschreitung der von ihm angeforderten Soll-Fahrzeugverzögerung a_{driver} kaum.

Bezüglich weiterer Verfahrensschritte der Ausführungsform der Fig. 5 wird auf das Verfahren der Fig. 4a und 4b verwiesen.

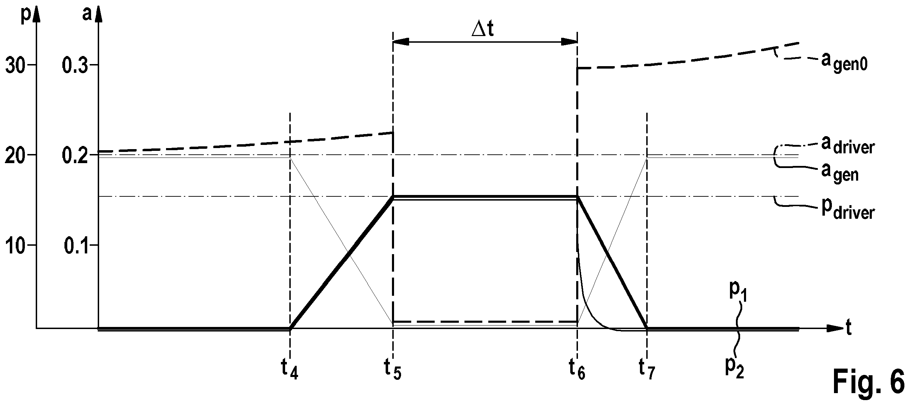

Fig. 6 zeigt ein Koordinatensystem zum Erläutern einer sechsten Ausführungsform des Verfahrens zum Betreiben eines rekuperativen Bremssystems eines Fahrzeugs. Die Abszisse des Koordinatensystems der Fig. 6 ist eine Zeitachse t, während mittels der Ordinaten des Koordinatensystems der Fig. 6 eine Verzögerung a (in Meter/Sekunde²) oder ein Druck p (in Bar) wiedergegeben sind.

Bei der Ausführungsform der Fig. 6 werden, sofern eine aktuelle Ausführbarkeit des rekuperativen Modus des Bremssystems für ein Zeitintervall Δt von höchstens zwei Sekunden verzögert oder unterbrochen ist, zumindest die Ventile der zwei Bremskreise derart angesteuert, dass der erste Bremsdruck p1 in jedem ersten Radbremszylinder der zwei Bremskreise und der zweite Bremsdruck p2 in jedem zweiten Radbremszylinder der zwei Bremskreise jeweils auf den Einbremsdruck p_{driver} des Fahrers gesteigert werden. Zwischen den Zeiten t₅ und t₆ wird die Soll-Fahrzeugverzögerung a_{driver} somit verlässlich eingehalten, und der Fahrer hat ein standardgemäßes Bremsbetätigungsgefühl/ Pedalgefühl. Ab der Zeit t₆, wenn die unterbrochene Ausführbarkeit des rekuperativen Modus des Bremssystems überwunden ist, wird zuerst der zweite Bremsdruck p2 in den zweiten Radbremszylindern durch Öffnen der zweiten Radauslassventile abgebaut. Dieser Druckabbau erfolgt vergleichsweise schnell und kann deshalb mittels der gleichzeitig ausgeführten Steigerung der generatorischen Fahrzeugverzögerung a_{gen} des Elektromotors nicht immer kompensiert werden. Dennoch bemerkt der Fahrer kaum Verzögerungsschwankungen, da nur ein relativ geringer zweiter Bremsdruck p2 in den zweiten Radbremszylindern der zwei Bremskreise abzubauen ist. Außerdem kann, wie oben bereits beschrieben, auch in diesem Fall der Druckabbau in den zweiten Radbremszylindern nur dann während einer Bremsung ausgeführt werden, wenn aufgrund eines Vergleichs der zweite Bremsdruck p2 unter einem vorgegebenen Vergleichsdruck liegt. Nach dem Druckabbau in den zweiten Radbremszylindern kann auch der erste Bremsdruck p1 in den ersten Radbremszylindern (durch Ablassen von Bremsflüssigkeit über die zweiten Radbremszylinder in die Speicherkammern) stetig abgebaut werden. Als zusätzliche Alternative ist es auch möglich, den Druckaufbau in den zweiten Radbremszylindern auf einen Maximaldruck zu begrenzen, dessen Abbau zu keiner für den Fahrer störenden Verringerung der Fahrzeugverzögerung führt.

Bezüglich weiterer Verfahrensschritte der Ausführungsform der Fig. 6 wird auf das Verfahren der Fig. 4a und 4b verwiesen.

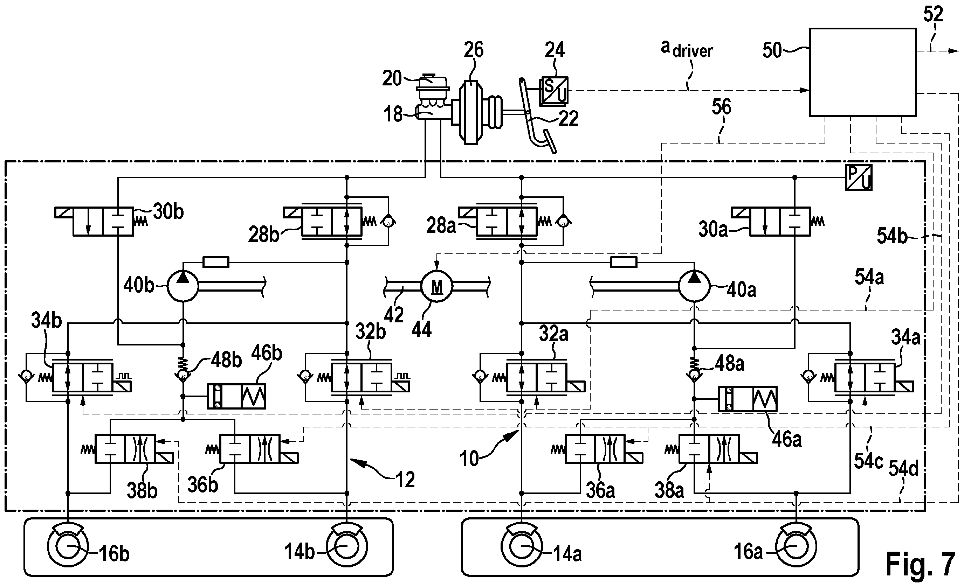

Fig. 7 zeigt eine schematische Darstellung einer Ausführungsform des rekuperativen Bremssystems.

Das in Fig. 7 schematisch wiedergegebene Bremssystem ist beispielsweise in einem Hybrid- und in einem Elektrofahrzeug vorteilhaft einsetzbar. Die Einsetzbarkeit des im Weiteren beschriebenen Bremssystems ist jedoch nicht auf die Verwendung in einem Hybrid- oder in einem Elektrofahrzeug beschränkt.

Das Bremssystem hat einen ersten Bremskreis 10 und einen zweiten Bremskreis 12 mit je einem ersten Radbremszylinder 14a und 14b und je einem zweiten Radbremszylinder 16a und 16b. Beispielhaft ist das Bremssystem für ein Fahrzeug mit X-Bremskreisaufteilung ausgelegt. Bevorzugter Weise sind die ersten Radbremszylinder 14a und 14b einer Vorderachse zugeordnet, während die zweiten Radbremszylinder 16a und 16b einer Hinterachse zugeordnet sind.

Das Bremssystem weist einen Hauptbremszylinder 18 auf, welcher beispielsweise als Tandemhauptbremszylinder ausführbar ist. Das Bremssystem ist jedoch nicht auf die Verwendung eines Tandemhauptbremszylinders oder auf eine bestimmte Ausbildung des Hauptbremszylinders 18 beschränkt. Der Hauptbremszylinder 18 kann über mindestens eine Bremsflüssigkeit-Austauschöffnung, wie beispielsweise eine Schnüffelbohrung, mit einem Bremsmediumreservoir 20 verbunden sein.

Das Bremssystem weist vorzugsweise ein an dem Hauptbremszylinder 18 angeordnetes Bremsbetätigungselement 22, wie beispielsweise ein Bremspedal 22, auf. Bevorzugter Weise umfasst das Bremssystem auch mindestens einen Bremsbetätigungselement-Sensor 24, mittels welchem die Betätigungsstärke der Betätigung des Bremsbetätigungselements 22 durch den Fahrer ermittelbar ist. Der Bremsbetätigungselement-Sensor 24 kann beispielsweise einen Pedalwegsensor, einen Differenzwegsensor und/oder einen Stangenwegsensor umfassen. Zur Erfassung der Betätigungsstärke, welche einer von dem Fahrer angeforderten Soll-Fahrzeugverzögerung a_{driver} entspricht, ist jedoch auch eine anders geartete Sensorik anstelle oder zusätzlich zu den hier aufgezählten Sensortypen einsetzbar. Das dargestellte Bremssystem weist in einer bevorzugten Ausführungsform noch einen Bremskraftverstärker 26, wie beispielsweise einen Vakuumbremskraftverstärker, auf. Anstelle eines Vakuumbremskraftverstärkers kann das Bremssystem auch einen anderen Typ des Bremskraftverstärkers 26, wie beispielsweise eine hydraulische und/oder eine elektromechanische Verstärkungseinrichtung, aufweisen. Der Bremskraftverstärker 26 kann insbesondere ein stetig regelbarer/stetig steuerbarer Bremskraftverstärker sein.

Jeder der Bremskreise 10 und 12 ist mit je einem Hochdruckschaltventil 28a und 28b und je einem Umschaltventil 30a und 30b ausgebildet. Jedem ersten Radbremszylinder 14a und 14b ist je ein erstes Radeinlassventil 32a und 32b und jedem zweiten Radbremszylinder 16a und 16b ist je ein zweites Radeinlassventil 34a und 34b (jeweils mit einer parallel dazu verlaufenden Bypassleitung und einem in jeder Bypassleitung angeordneten Rückschlagventil) zugeordnet. Zusätzlich ist jedem ersten Radbremszylinder 14a und 14b je ein erstes Radauslassventil 36a und 36b und jedem zweiten Radbremszylinder 16a und 16b je ein zweites Radauslassventil 38a und 38b zugeordnet.

Außerdem umfasst jeder der Bremskreise 10 und 12 je eine Pumpe 40a und 40b, deren Ansaugseite mit den Radauslassventilen 36a und 38a oder 36b und 38b verbunden ist und deren Förderseite zu den zugeordneten Radeinlassventilen 32a und 34a oder 32b und 34b gerichtet ist. Die Pumpen 40a und 40b können auf einer gemeinsamen Welle 42 eines Motors 44 angeordnet sein. Je eine zwischen den Radauslassventilen 36a und 38a oder 36b und 38b und der Pumpe 40a oder 40b angeordnete Speicherkammer 46a oder 46b (z.B. eine Niederdruckspeicher) und je ein zwischen der Pumpe 40a oder 40b und der Speicherkammer 46a oder 46b liegendes Überdruckventil 48a oder 48b weisen die Bremskreise 10 und 12 ebenso auf.

Das Bremssystem hat auch einen (nicht skizzierten) Elektromotor und eine Steuervorrichtung 50, welche während einer Betätigung des Bremsbetätigungselements 22 durch den Fahrer des Fahrzeugs zur Vorgabe der Soll-Fahrzeugverzögerung a_{driver} dazu ausgelegt ist, zu ermitteln, ob ein rekuperativer Modus des Bremssystems aktuell ausführbar ist, in welchem mittels eines generatorischen Betriebs des Elektromotors eine generatorische Fahrzeugverzögerung gleich der angeforderten Soll-Fahrzeugverzögerung a_{driver} bewirkbar ist. Gegebenenfalls ist die Steuervorrichtung 50 dazu ausgelegt, den Elektromotor (mittels mindestens eines Motorsteuersignals 52) derart anzusteuern, dass die generatorische Fahrzeugverzögerung gleich der angeforderten Soll-Fahrzeugverzögerung a_{driver} bewirkbar ist/bewirkt wird. Gleichzeitig ist die Steuervorrichtung 50 dazu ausgelegt, die Ventile 32a, 32b, 34a, 34b, 36a, 36b, 38a und 38b der zwei Bremskreise 10 und 12 (mittels mindestens eines Ventilsteuersignals 54a bis 54d) derart anzusteuern, dass aus dem Hauptbremszylinder 18 verschobene Bremsflüssigkeit in die Speicherkammern 46a und 46b der zwei Bremskreise 10 und 12 so verschiebbar ist/verschoben wird, dass ein Bremsdruck in jedem Radbremszylinder 14a, 14b, 16a und 16b der zwei Bremskreise 10 und 12 höchstens gleich einem Ansprechdruck der Speicherkammer 26a oder 46b des jeweiligen Bremskreises 10 und 12 ist. Außerdem ist die Steuervorrichtung 50 dazu ausgelegt, zu ermitteln, ob eine aktuelle Ausführbarkeit des rekuperativen Modus des Bremssystems für ein Zeitintervall von höchstens zwei Sekunden verzögert oder unterbrochen ist, und gegebenenfalls, zumindest die Ventile 32a, 32b, 34a, 34b, 36a, 36b, 38a und 38b der zwei Bremskreise 10 und 12 (mittels des mindestens einen Ventilsteuersignals 54a bis 54d) derart anzusteuern, dass zumindest eine mittels der ersten Radbremszylinder 14a und 14b der zwei Bremskreise 10 und 12 bewirkte erste hydraulische Fahrzeugverzögerung steigerbar ist/gesteigert wird. Auch die Pumpen 40a und 40b der zwei Bremskreise 10 und 12 können (mittels mindestens eines Pumpensteuersignals 56) der Steuervorrichtung 50 ansteuerbar sein.

Insbesondere kann die Steuervorrichtung 50 dazu ausgelegt sein, das Bremssystem derart anzusteuern, dass eines der oben beschriebenen Verfahren ausführbar ist/ausgeführt wird. Auf eine erneute Beschreibung dieser Verfahren wird jedoch hier verzichtet.

## Patentansprüche

1. Rekuperatives Bremssystem für ein Fahrzeug, mit:
einem Hauptbremszylinder (18);
zwei Bremskreisen (10, 12), mit zumindest je einem ersten Radbremszylinder (14a, 14b), je einem zweiten Radbremszylinder (16a, 16b), je einer Speicherkammer (46a, 46b) und je mindestens einem Ventil (32a, 32b, 34a, 34b, 36a, 36b, 38a, 38b);
einem Elektromotor; und
einer Steuervorrichtung (50), welche während einer Betätigung eines an dem Hauptbremszylinder (18) angebundenen Bremsbetätigungselements (22) durch einen Fahrer des Fahrzeugs zur Vorgabe einer Soll-Fahrzeugverzögerung (a_{driver}) dazu ausgelegt ist, zu ermitteln, ob ein rekuperativer Modus des Bremssystems aktuell ausführbar ist, in welchem mittels eines generatorischen Betriebs des Elektromotors eine generatorische Fahrzeugverzögerung (a_{gen}) gleich der angeforderten Soll-Fahrzeugverzögerung (a_{driver}) bewirkbar ist, und, gegebenenfalls, den Elektromotor derart anzusteuern, dass die generatorische Fahrzeugverzögerung (a_{gen}) gleich der angeforderten Soll-Fahrzeugverzögerung (a_{driver}) bewirkbar ist, und die Ventile (32a, 32b, 34a, 34b, 36a, 36b, 38a, 38b) der zwei Bremskreise (10, 12) derart anzusteuern, dass aus dem Hauptbremszylinder (18) verschobene Bremsflüssigkeit in die Speicherkammern (46a, 46b) der zwei Bremskreise (10, 12) so verschiebbar ist, dass ein Bremsdruck in jedem Radbremszylinder (14a, 14b, 16a, 16b) der zwei Bremskreise (10, 12) höchstens gleich einem Ansprechdruck der Speicherkammer (46a, 46b) des jeweiligen Bremskreises (10, 12) ist;
wobei die Steuervorrichtung (50) zusätzlich dazu ausgelegt ist, zu ermitteln, ob eine aktuelle Ausführbarkeit des rekuperativen Modus des Bremssystems zumindest zeitweise verzögert oder unterbrochen ist,
**dadurch gekennzeichnet, dass**
die Steuervorrichtung (50) zusätzlich dazu ausgelegt ist, zu ermitteln, ob eine aktuelle Ausführbarkeit des rekuperativen Modus des Bremssystems für ein Zeitintervall (Δt) von höchstens zwei Sekunden verzögert oder unterbrochen ist, indem die Steuervorrichtung (50) dazu ausgelegt ist, zu ermitteln, ob eine Kupplung des Fahrzeugs geöffnet ist, ob eine Zwischenzeit zwischen einer Betätigung eines Fahrpedals des Fahrzeugs und der nachfolgenden Betätigung des Bremsbetätigungselements (22) unter einer vorgegebenen Mindestzeit liegt, ob eine aktuelle Geschwindigkeit des Fahrzeugs über einer Höchstgeschwindigkeit, bis zu welcher der rekuperative Modus des Bremssystems ausführbar ist, liegt, und/oder ob ein Gangwechsel ausgeführt wird, und gegebenenfalls festzustellen, dass eine aktuelle Ausführbarkeit des rekuperativen Modus des Bremssystems für ein Zeitintervall (Δt) von höchstens zwei Sekunden verzögert oder unterbrochen ist,
wobei, sofern eine aktuelle Ausführbarkeit des rekuperativen Modus des Bremssystems für ein Zeitintervall (Δt) von höchstens zwei Sekunden verzögert oder unterbrochen ist, die Steuervorrichtung (50) dazu ausgelegt ist, zumindest die Ventile (32a, 32b, 34a, 34b, 36a, 36b, 38a, 38b) der zwei Bremskreise (10, 12) derart anzusteuern, dass zumindest eine mittels der ersten Radbremszylinder (14a, 14b) der zwei Bremskreise (10, 12) bewirkte erste hydraulische Fahrzeugverzögerung (a_{hyd1}) steigerbar ist.

2. Rekuperatives Bremssystem nach Anspruch 1, wobei, sofern eine aktuelle Ausführbarkeit des rekuperativen Modus des Bremssystems für ein Zeitintervall (Δt) von höchstens zwei Sekunden verzögert oder unterbrochen ist, die Steuervorrichtung (50) dazu ausgelegt ist, zumindest die Ventile (32a, 32b, 34a, 34b, 36a, 36b, 38a, 38b) der zwei Bremskreise (10, 12) derart anzusteuern, dass, zumindest sofern die angeforderte Soll-Fahrzeugverzögerung (a_{driver}) unter einer vorgegebenen Grenzverzögerung (a_{threshold}) liegt, die mittels der ersten Radbremszylinder (14a, 14b) der zwei Bremskreise (10, 12) bewirkte erste hydraulische Fahrzeugverzögerung (a_{hyd1}) auf die Soll-Fahrzeugverzögerung (a_{driver}) steigerbar ist, während ein Bremsdruck (p2) in jedem zweiten Radbremszylinder (16a, 16b) der zwei Bremskreise (10, 12) höchstens gleich dem Ansprechdruck der Speicherkammer (46a, 46b) des jeweiligen Bremskreises (10, 12) ist.

3. Rekuperatives Bremssystem nach Anspruch 2, wobei, sofern eine aktuelle Ausführbarkeit des rekuperativen Modus des Bremssystems für ein Zeitintervall (Δt) von höchstens zwei Sekunden verzögert oder unterbrochen ist, die Steuervorrichtung (50) dazu ausgelegt ist, zumindest die Ventile (32a, 32b, 34a, 34b, 36a, 36b, 38a, 38b) der zwei Bremskreise (10, 12) derart anzusteuern, dass, sofern die angeforderte Soll-Fahrzeugverzögerung (a_{driver}) über der vorgegebenen Grenzverzögerung (a_{threshold}) liegt, auch der Bremsdruck (p2) in jedem zweiten Radbremszylinder (16a, 16b) der zwei Bremskreise (10, 12) über den Ansprechdruck der Speicherkammer (46a, 46b) des jeweiligen Bremskreises (10, 12) steigerbar ist und eine Summe der mittels der ersten Radbremszylinder (14a, 14b) der zwei Bremskreise (10, 12) bewirkten ersten hydraulischen Fahrzeugverzögerung (a_{hyd1}) und einer mittels der zweiten Radbremszylinder (16a, 16b) der zwei Bremskreise (10, 12) bewirkten zweiten hydraulischen Fahrzeugverzögerung (a_{hyd2}) auf die Soll-Fahrzeugverzögerung (a_{driver}) steigerbar ist.

4. Rekuperatives Bremssystem nach Anspruch 1, wobei, sofern eine aktuelle Ausführbarkeit des rekuperativen Modus des Bremssystems für ein Zeitintervall (Δt) von höchstens zwei Sekunden verzögert oder unterbrochen ist, die Steuervorrichtung (50) dazu ausgelegt ist, zumindest die Ventile (32a, 32b, 34a, 34b, 36a, 36b, 38a, 38b) der zwei Bremskreise (10, 12) derart anzusteuern, dass zumindest ein Bremsdruck (p1) in jedem ersten Radbremszylinder (14a, 14b) der zwei Bremskreise (10, 12) auf einen von dem Fahrer in dem Hauptbremszylinder (18) bewirkten Einbremsdruck (Pdriver) steigerbar ist.

5. Rekuperatives Bremssystem nach einem der vorhergehenden Ansprüche, wobei die ersten Radbremszylinder (14a, 14b) der zwei Bremskreise (10, 12) einer Vorderachse des Fahrzeugs und die zweiten Radbremszylinder (16a, 16b) der zwei Bremskreise (10, 12) einer Hinterachse des Fahrzeugs zugeordnet sind.

6. Verfahren zum Betreiben eines rekuperativen Bremssystems eines Fahrzeugs mit den Schritten:
Ermitteln während einer Betätigung eines an einem Hauptbremszylinder (18) des Bremssystems angebundenen Bremsbetätigungselements (22) durch einen Fahrer des Fahrzeugs zur Vorgabe einer Soll-Fahrzeugverzögerung (a_{driver}), ob ein rekuperativer Modus des Bremssystems mit zwei Bremskreisen (10, 12) mit zumindest je einem ersten Radbremszylinder (14a, 14b), je einem zweiten Radbremszylinder (16a, 16b), je einer Speicherkammer (46a, 46b) und je mindestens einem Ventil (32a, 32b, 34a, 34b, 36a, 36b, 38a, 38b) aktuell ausführbar ist, in welchem mittels eines generatorischen Betriebs eines Elektromotors des Bremssystems eine generatorische Fahrzeugverzögerung (a_{gen}) gleich der angeforderten Soll-Fahrzeugverzögerung (a_{driver}) bewirkbar ist; und
gegebenenfalls, Ansteuern des Elektromotors derart, dass die generatorische Fahrzeugverzögerung (a_{gen}) gleich der angeforderten Soll-Fahrzeugverzögerung (a_{driver}) bewirkt wird, und Ansteuern der Ventile (32a, 32b, 34a, 34b, 36a, 36b, 38a, 38b) der zwei Bremskreise (10, 12) derart, dass aus dem Hauptbremszylinder (18) verschobene Bremsflüssigkeit in die Speicherkammern (46a, 46b) der zwei Bremskreise (10, 12) so verschoben wird, dass ein Bremsdruck in jedem Radbremszylinder (14a, 14b, 16a, 16b) der zwei Bremskreise (10, 12) höchstens gleich einem Ansprechdruck der Speicherkammer (46a, 46b) des jeweiligen Bremskreises (10, 12) ist;
wobei zusätzlich ermittelt wird, ob eine aktuelle Ausführbarkeit des rekuperativen Modus des Bremssystems für ein Zeitintervall (Δt) zumindest zeitweise verzögert oder unterbrochen ist;
**gekennzeichnet durch** die Schritte, dass
ermittelt wird, ob eine Kupplung des Fahrzeugs geöffnet ist, ob eine Zwischenzeit zwischen einer Betätigung eines Fahrpedals des Fahrzeugs und der nachfolgenden Betätigung des Bremsbetätigungselements (22) unter einer vorgegebenen Mindestzeit liegt, ob eine aktuelle Geschwindigkeit des Fahrzeugs über einer Höchstgeschwindigkeit, bis zu welcher der rekuperative Modus des Bremssystems ausführbar ist, liegt, und/oder ob ein Gangwechsel ausgeführt wird, und gegebenenfalls festgestellt wird, dass eine aktuelle Ausführbarkeit des rekuperativen Modus des Bremssystems für ein Zeitintervall (Δt) von höchstens zwei Sekunden verzögert oder unterbrochen ist, und
sofern eine aktuelle Ausführbarkeit des rekuperativen Modus des Bremssystems für ein Zeitintervall (Δt) von höchstens zwei Sekunden verzögert oder unterbrochen ist, zumindest die Ventile (32a, 32b, 34a, 34b, 36a, 36b, 38a, 38b) der zwei Bremskreise (10, 12) derart angesteuert werden, dass zumindest eine mittels der ersten Radbremszylinder (14a, 14b) der zwei Bremskreise (10, 12) bewirkte erste hydraulische Fahrzeugverzögerung (a_{hyd1}) gesteigert wird.

7. Verfahren nach Anspruch 6, wobei, sofern eine aktuelle Ausführbarkeit des rekuperativen Modus des Bremssystems für ein Zeitintervall (Δt) von höchstens zwei Sekunden verzögert oder unterbrochen ist, zumindest die Ventile (32a, 32b, 34a, 34b, 36a, 36b, 38a, 38b) der zwei Bremskreise (10, 12) derart angesteuert werden, dass, zumindest sofern die angeforderte Soll-Fahrzeugverzögerung (a_{driver}) unter einer vorgegebenen Grenzverzögerung (a_{threshold}) liegt, die mittels der ersten Radbremszylinder (14a, 14b) der zwei Bremskreise (10, 12) bewirkte erste hydraulische Fahrzeugverzögerung (a_{hyd1}) auf die Soll-Fahrzeugverzögerung (a_{driver}) gesteigert wird, während ein Bremsdruck (p2) in jedem zweiten Radbremszylinder (16a, 16b) der zwei Bremskreise (10, 12) höchstens gleich dem Ansprechdruck der Speicherkammer (46a, 46b) des jeweiligen Bremskreises (10, 12) ist.

8. Verfahren nach Anspruch 7, wobei, sofern eine aktuelle Ausführbarkeit des rekuperativen Modus des Bremssystems für ein Zeitintervall (Δt) von höchstens zwei Sekunden verzögert oder unterbrochen ist, zumindest die Ventile (32a, 32b, 34a, 34b, 36a, 36b, 38a, 38b) der zwei Bremskreise (10, 12) derart angesteuert werden, dass, sofern die angeforderte Soll-Fahrzeugverzögerung (a_{driver}) über der vorgegebenen Grenzverzögerung (a_{threshold}) liegt, auch der Bremsdruck (p2) in jedem zweiten Radbremszylinder (16a, 16b) der zwei Bremskreise (10, 12) über den Ansprechdruck der Speicherkammer (46a, 46b) des jeweiligen Bremskreises (10, 12) gesteigert wird und eine Summe der mittels der ersten Radbremszylinder (14a, 14b) der zwei Bremskreise (10, 12) bewirkten ersten hydraulischen Fahrzeugverzögerung (a_{hyd1}) und einer mittels der zweiten Radbremszylinder (16a, 16b) der zwei Bremskreise (10, 12) bewirkten zweiten hydraulischen Fahrzeugverzögerung (a_{hyd2}) auf die Soll-Fahrzeugverzögerung (a_{driver}) gesteigert wird.

9. Verfahren nach Anspruch 6, wobei, sofern eine aktuelle Ausführbarkeit des rekuperativen Modus des Bremssystems für ein Zeitintervall (Δt) von höchstens zwei Sekunden verzögert oder unterbrochen ist, zumindest die Ventile (32a, 32b, 34a, 34b, 36a, 36b, 38a, 38b) der zwei Bremskreise (10, 12) derart angesteuert werden, dass zumindest ein Bremsdruck (p1) in jedem ersten Radbremszylinder (14a, 14b) der zwei Bremskreise (10, 12) auf einen von dem Fahrer in dem Hauptbremszylinder (18) bewirkten Einbremsdruck (p_{driver}) gesteigert wird.

10. Verfahren nach einem der Ansprüche 6 bis 9, wobei das Bremssystem betrieben wird, dessen erste Radbremszylinder (14a, 14b) der zwei Bremskreise (10, 12) einer Vorderachse des Fahrzeugs und dessen zweite Radbremszylinder (16a, 16b) der zwei Bremskreise (10, 12) einer Hinterachse des Fahrzeugs zugeordnet sind.

## Claims

1. Regenerative brake system for a vehicle, with
a brake master cylinder (18);
two brake circuits (10, 12), with at least in each case one first wheel brake cylinder (14a, 14b), in each case one second wheel brake cylinder (16a, 16b), in each case one accumulator chamber (46a, 46b) and in each case at least one valve (32a, 32b, 34a, 34b, 36a, 36b, 38a, 38b);
an electric motor; and
a control apparatus (50) which is assigned, during an actuation of a brake actuating element (22), attached to the brake master cylinder (18), by way of a driver of the vehicle in order to specify a setpoint vehicle deceleration (a_{driver}) , to determine whether a regenerative mode of the brake system can currently be carried out, in which mode a regenerative vehicle deceleration (a_{gen}) equal to the requested setpoint vehicle deceleration (a_{driver}) can be brought about by means of regenerative operation of the brake system, and optionally to actuate the electric motor in such a way that the regenerative vehicle deceleration (a_{gen}) equal to the requested setpoint vehicle deceleration (a_{driver}) can be brought about, and to actuate the valves (32a, 32b, 34a, 34b, 36a, 36b, 38a, 38b) of the two brake circuits (10, 12) in such a way that brake fluid which is moved out of the brake master cylinder (18) can be moved into the accumulator chambers (46a, 46b) of the two brake circuits (10, 12) in such a way that a brake pressure in each wheel brake cylinder (14a, 14b, 16a, 16b) of the two brake circuits (10, 12) is at most equal to a response pressure of the accumulator chamber (46a, 46b) of the respective brake circuit (10, 12);
the control apparatus (50) additionally being designed to determine whether a current practicability of the regenerative mode of the brake system is at least temporarily delayed or interrupted,
**characterized in that**
the control apparatus (50) is additionally designed to determine whether a current practicability of the regenerative mode of the brake system is delayed or interrupted for a time interval (Δt) of at most two seconds, by the control apparatus (50) being designed to determine whether a clutch of the vehicle is open, whether an interval between an actuation of an accelerator pedal of the vehicle and the following actuation of the brake actuating element (22) lies below a predefined minimum time, whether a current speed of the vehicle lies above a maximum speed, up to which the regenerative mode of the brake system can be carried out, and/or whether a gear change is being carried out, and optionally to determine that a current practicability of the regenerative mode of the brake system is delayed or interrupted for a time interval (Δt) of at most two seconds,
the control apparatus (50) being designed, if a current practicability of the regenerative mode of the brake system is delayed or interrupted for a time interval (Δt) of at most two seconds, to actuate at least the valves (32a, 32b, 34a, 34b, 36a, 36b, 38a, 38b) of the two brake circuits (10, 12) in such a way that at least one first hydraulic vehicle deceleration (a_{hyd1}) which is brought about by means of the first wheel brake cylinders (14a, 14b) of the two brake circuits (10, 12) can be increased.

2. Regenerative brake system according to Claim 1, the control apparatus (50) being designed, if a current practicability of the regenerative mode of the brake system is delayed or interrupted for a time interval (Δt) of at most two seconds, to actuate at least the valves (32a, 32b, 34a, 34b, 36a, 36b, 38a, 38b) of the two brake circuits (10, 12) in such a way that, at least if the requested setpoint vehicle deceleration (a_{driver}) lies below a predefined limit deceleration (a_{threshold}), the first hydraulic vehicle deceleration (a_{hyd1}) which is brought about by means of the first wheel brake cylinders (14a, 14b) of the two brake circuits (10, 12) can be increased to the setpoint vehicle deceleration (a_{driver}), whereas a brake pressure (p2) in the each second wheel brake cylinder (16a, 16b) of the two brake circuits (10, 12) is at most equal to the response pressure of the accumulator chamber (46a, 46b) of the respective brake circuit (10, 12).

3. Regenerative brake system according to Claim 2, the control apparatus (50) being designed, if a current practicability of the regenerative mode of the brake system is delayed or interrupted for a time interval (Δt) of at most two seconds, to actuate at least the valves (32a, 32b, 34a, 34b, 36a, 36b, 38a, 38b) of the two brake circuits (10, 12) in such a way that, if the requested setpoint vehicle deceleration (a_{driver}) lies above a predefined limit deceleration (a_{threshold}), the brake pressure (p2) in each second wheel brake cylinder (16a, 16b) of the two brake circuits (10, 12) can also be increased above the response pressure of the accumulator chamber (46a, 46b) of the respective brake circuit (10, 12), and a sum of the first hydraulic vehicle deceleration (a_{hyd1}) brought about by means of the first wheel brake cylinders (14a, 14b) of the two brake circuits (10, 12) and a second hydraulic vehicle deceleration (a_{hyd2}) brought about by means of the second wheel brake cylinders (16a, 16b) of the two brake circuits (10, 12) can be increased to the setpoint vehicle deceleration (a_{driver}).

4. Regenerative brake system according to Claim 1, the control apparatus (50) being designed, if a current practicability of the regenerative mode of the brake system is delayed or interrupted for a time interval (Δt) of at most two seconds, to actuate at least the valves (32a, 32b, 34a, 34b, 36a, 36b, 38a, 38b) of the two brake circuits (10, 12) in such a way that at least one brake pressure (p1) in each first wheel brake cylinder (14a, 14b) of the two brake circuits (10, 12) can be increased to a braking pressure (p_{driver}) which is brought about in the brake master cylinder (18) by the driver.

5. Regenerative brake system according to one of the preceding claims, the first wheel brake cylinders (14a, 14b) of the two brake circuits (10, 12) being assigned to a front axle of the vehicle, and the second wheel brake cylinders (16a, 16b) of the two brake circuits (10, 12) being assigned to a rear axle of the vehicle.

6. Method for operating a regenerative brake system of a vehicle having the steps:
determining during an actuation of a brake actuating element (22), attached to a brake master cylinder (18) of the brake system, by way of a driver of the vehicle in order to specify a setpoint vehicle deceleration (a_{driver}) whether a regenerative mode of the brake system with two brake circuits (10, 12) with at least in each case one first wheel brake cylinder (14a, 14b), in each case one second wheel brake cylinder (16a, 16b), in each case one accumulator chamber (46a, 46b) and in each case one valve (32a, 32b, 34a, 34b, 36a, 36b, 38a, 38b) can currently be carried out, in which mode a regenerative vehicle deceleration (a_{gen}) equal to the requested setpoint vehicle deceleration (a_{driver}) can be brought about by means of regenerative operation of an electric motor of the brake system; and
optionally actuating of the electric motor in such a way that the regenerative vehicle deceleration (a_{gen}) equal to the requested setpoint vehicle deceleration (a_{driver}) is brought about, and actuating of the valves (32a, 32b, 34a, 34b, 36a, 36b, 38a, 38b) of the two brake circuits (10, 12) in such a way that brake fluid which is moved out of the brake master cylinder (18) is moved into the accumulator chambers (46a, 46b) of the two brake circuits (10, 12) in such a way that a brake pressure in each wheel brake cylinder (14a, 14b, 16a, 16b) of the two brake circuits (10, 12) is at most equal to a response pressure of the accumulator chamber (46a, 46b) of the respective brake circuit (10, 12);
it additionally being determined whether a current practicability of the regenerative mode of the brake system is delayed or interrupted at least temporarily for a time interval (Δt);
**characterized by** the steps that
it is determined whether a clutch of the vehicle is open, whether an interval between an actuation of an accelerator pedal of the vehicle and the following actuation of the brake actuating element (22) lies below a predefined minimum time, whether a current speed of the vehicle lies above a maximum speed, up to which the regenerative mode of the brake system can be carried out, and/or whether a gear change is being carried out, and it is optionally determined that a current practicability of the regenerative mode of the brake system is delayed or interrupted for a time interval (Δt) of at most two seconds, and,
if a current practicability of the regenerative mode of the brake system is delayed or interrupted for a time interval (Δt) of at most two seconds, at least the valves (32a, 32b, 34a, 34b, 36a, 36b, 38a, 38b) of the two brake circuits (10, 12) are actuated in such a way that at least one first hydraulic vehicle deceleration (a_{hyd1}) brought about by means of the first wheel brake cylinders (14a, 14b) of the two brake circuits (10, 12) is increased.

7. Method according to Claim 6, at least the valves (32a, 32b, 34a, 34b, 36a, 36b, 38a, 38b) of the two brake circuits (10, 12) being actuated, if a current practicability of the regenerative mode of the brake system is delayed or interrupted for a time interval (Δt) of at most two seconds, in such a way that, at least if the requested setpoint vehicle deceleration (a_{driver}) lies below a predefined limit deceleration (a_{threshold}), the first vehicle deceleration (a_{hyd1}) brought about by means of the first wheel brake cylinders (14a, 14b) of the two brake circuits (10, 12) is increased to the setpoint vehicle deceleration (a_{driver}), whereas a brake pressure (p2) in each second wheel brake cylinder (16a, 16b) of the two brake circuits (10, 12) is at most equal to the response pressure of the accumulator chamber (46a, 46b) of the respective brake circuit (10, 12).

8. Method according to Claim 7, at least the valves (32a, 32b, 34a, 34b, 36a, 36b, 38a, 38b) of the two brake circuits (10, 12) being actuated, if a current practicability of the regenerative mode of the brake system is delayed or interrupted for a time interval (Δt) of at most two seconds, in such a way that, if the requested setpoint vehicle deceleration (a_{driver}) lies above the predefined limit deceleration (a_{threshold}), the brake pressure (p2) in each second wheel brake cylinder (16a, 16b) of the two brake circuits (10, 12) is also increased above the response pressure of the accumulator chamber (46a, 46b) of the respective brake circuit (10, 12), and a sum of the first hydraulic vehicle deceleration (a_{hyd1}) brought about by means of the first wheel brake cylinders (14a, 14b) of the two brake circuits (10, 12) and a second hydraulic vehicle deceleration (a_{hyd2}) brought about by means of the second wheel brake cylinders (16a, 16b) of the two brake circuits (10, 12) being increased to the setpoint vehicle deceleration (a_{driver}) .

9. Method according to Claim 6, at least the valves (32a, 32b, 34a, 34b, 36a, 36b, 38a, 38b) of the two brake circuits (10, 12) being actuated, if a current practicability of the regenerative mode of the brake system is delayed or interrupted for a time interval (Δt) of at most two seconds, in such a way that at least one brake pressure (p1) in each first wheel brake cylinder (14a, 14b) of the two brake circuits (10, 12) is increased to a braking pressure (p_{driver}) brought about in the brake master cylinder (18) by the driver.

10. Method according to one of Claims 6 to 9, the brake system being operated, the first wheel brake cylinders (14a, 14b) of which of the two brake circuits (10, 12) are assigned to a front axle of the vehicle, and the second wheel brake cylinders (16a, 16b) of which of the two brake circuits (10, 12) are assigned to a rear axle of the vehicle.

## Revendications

1. Système de freinage à récupération pour un véhicule, comprenant :
un maître-cylindre de frein (18) ;
deux circuits de freinage (10, 12), avec au moins respectivement un premier cylindre de frein de roue (14a, 14b), respectivement un deuxième cylindre de frein de roue (16a, 16b), respectivement une chambre d'accumulation (46a, 46b) et respectivement au moins une soupape (32a, 32b, 34a, 34b, 36a, 36b, 38a, 38b) ;
un moteur électrique ; et
un dispositif de commande (50) qui, pendant un actionnement d'un élément d'actionnement de frein (22) rattaché au maître-cylindre de frein (18) par un conducteur du véhicule pour la spécification d'une décélération de véhicule théorique (a_{driver}), est conçu pour déterminer si un mode récupération du système de freinage est actuellement faisable dans lequel, au moyen d'un fonctionnement en mode générateur du moteur électrique, une décélération de véhicule en mode générateur (a_{gen}) égale à la décélération de véhicule théorique (a_{driver}) demandée est réalisable, et le cas échéant, pour piloter le moteur électrique de telle sorte que la décélération de véhicule en mode générateur (a_{gen}) égale à la décélération de véhicule théorique (a_{driver}) demandée est réalisable, et pour piloter les soupapes (32a, 32b, 34a, 34b, 36a, 36b, 38a, 38b) des deux circuits de freinage (10, 12) de telle sorte qu'un liquide de frein déplacé du maître-cylindre de frein (18) dans les chambres d'accumulation (46a, 46b) des deux circuits de freinage (10, 12) peut être déplacé de telle sorte qu'une pression de freinage dans chaque cylindre de frein de roue (14a, 14b, 16a, 16b) des deux circuits de freinage (10, 12) est au maximum égale à une pression de réponse de la chambre d'accumulation (46a, 46b) du circuit de freinage (10, 12) respectif ;
le dispositif de commande (50) étant en outre conçu pour déterminer si une faisabilité actuelle du mode récupération du système de freinage est au moins temporairement retardée ou interrompue,
**caractérisé en ce que** le dispositif de commande (50) est en outre conçu pour déterminer si une faisabilité actuelle du mode récupération du système de freinage est retardée ou interrompue pendant un intervalle de temps (Δt) d'un maximum de deux secondes **en ce que** le dispositif de commande (50) est conçu pour déterminer si un embrayage du véhicule est ouvert, si un temps intermédiaire entre un actionnement d'une pédale d'accélérateur du véhicule et l'actionnement consécutif de l'élément d'actionnement de frein (22) est inférieur à un temps minimum spécifié, si une vitesse actuelle du véhicule est supérieure à une vitesse maximale jusqu'à laquelle le mode récupération du système de freinage est faisable, et/ou si un changement de vitesse est effectué, et le cas échéant pour constater qu'une faisabilité actuelle du mode récupération du système de freinage est retardée ou interrompue pendant un intervalle de temps (Δt) d'un maximum de deux secondes,
dans lequel, dans la mesure où une faisabilité actuelle du mode récupération du système de freinage est retardée ou interrompue pendant un intervalle de temps (Δt) d'un maximum de deux secondes, le dispositif de commande (50) est conçu pour piloter au moins les soupapes (32a, 32b, 34a, 34b, 36a, 36b, 38a, 38b) des deux circuits de freinage (10, 12) de telle sorte qu'au moins une première décélération hydraulique de véhicule (a_{hyd1}), provoquée au moyen des premiers cylindres de frein de roue (14a, 14b) des deux circuits de freinage (10, 12), peut être augmentée.

2. Système de freinage à récupération selon la revendication 1, dans lequel, dans la mesure où une faisabilité actuelle du mode récupération du système de freinage est retardée ou interrompue pendant un intervalle de temps (Δt) d'un maximum de deux secondes, le dispositif de commande (50) est conçu pour piloter au moins les soupapes (32a, 32b, 34a, 34b, 36a, 36b, 38a, 38b) des deux circuits de freinage (10, 12) de telle sorte qu'au moins dans la mesure où la décélération de véhicule théorique (a_{driver}) demandée est inférieure à une décélération limite spécifiée (a_{threshold}) , la première décélération hydraulique de véhicule (a_{hyd1}) provoquée au moyen des premiers cylindres de frein de roue (14a, 14b) des deux circuits de freinage (10, 12) peut être augmentée jusqu'à la décélération de véhicule théorique (a_{driver}) alors qu'une pression de freinage (p2) dans chaque deuxième cylindre de frein de roue (16a, 16b) des deux circuits de freinage (10, 12) est au maximum égale à la pression de réponse de la chambre d'accumulation (46a, 46b) du circuit de freinage (10, 12) respectif.

3. Système de freinage à récupération selon la revendication 2, dans lequel, dans la mesure où une faisabilité actuelle du mode récupération du système de freinage est retardée ou interrompue pendant un intervalle de temps (Δt) d'un maximum de deux secondes, le dispositif de commande (50) est conçu pour piloter au moins les soupapes (32a, 32b, 34a, 34b, 36a, 36b, 38a, 38b) des deux circuits de freinage (10, 12) de telle sorte que dans la mesure où la décélération de véhicule théorique (a_{driver}) demandée est supérieure à la décélération limite spécifiée (a_{threshold}) , la pression de freinage (p2) dans chaque deuxième cylindre de frein de roue (16a, 16b) des deux circuits de freinage (10, 12) peut également être augmentée au-dessus de la pression de réponse de la chambre d'accumulation (46a, 46b) du circuit de freinage (10, 12) respectif, et une somme de la première décélération hydraulique de véhicule (a_{hyd1}) provoquée au moyen des premiers cylindres de frein de roue (14a, 14b) des deux circuits de freinage (10, 12) et d'une deuxième décélération hydraulique de véhicule (a_{hyd2}) provoquée au moyen des deuxièmes cylindres de frein de roue (16a, 16b) des deux circuits de freinage (10, 12) peut être augmentée jusqu'à la décélération de véhicule théorique (a_{driver}).

4. Système de freinage à récupération selon la revendication 1, dans lequel, dans la mesure où une faisabilité actuelle du mode récupération du système de freinage est retardée ou interrompue pendant un intervalle de temps (Δt) d'un maximum de deux secondes, le dispositif de commande (50) est conçu pour piloter au moins les soupapes (32a, 32b, 34a, 34b, 36a, 36b, 38a, 38b) des deux circuits de freinage (10, 12) de telle sorte qu'au moins une pression de freinage (p1) dans chaque premier cylindre de frein de roue (14a, 14b) des deux circuits de freinage (10, 12) peut être augmentée jusqu'à une pression de freinage de rodage (p_{driver}) provoquée par le conducteur dans le maître-cylindre de frein (18).

5. Système de freinage à récupération selon l'une quelconque des revendications précédentes, dans lequel les premiers cylindres de frein de roue (14a, 14b) des deux circuits de freinage (10, 12) sont associés à un essieu avant du véhicule, et les deuxièmes cylindres de frein de roue (16a, 16b) des deux circuits de freinage (10, 12) sont associés à un essieu arrière du véhicule.

6. Procédé permettant de faire fonctionner un système de freinage à récupération d'un véhicule, comprenant les étapes consistant à :
déterminer, pendant un actionnement d'un élément d'actionnement de frein (22) rattaché à un maître-cylindre de frein (18) du système de freinage par un conducteur du véhicule pour la spécification d'une décélération de véhicule théorique (a_{driver}), si un mode récupération du système de freinage avec deux circuits de freinage (10, 12) avec au moins respectivement un premier cylindre de frein de roue (14a, 14b), respectivement un deuxième cylindre de frein de roue (16a, 16b), respectivement une chambre d'accumulation (46a, 46b) et respectivement au moins une soupape (32a, 32b, 34a, 34b, 36a, 36b, 38a, 38b) est faisable actuellement, dans lequel, au moyen d'un fonctionnement en mode générateur d'un moteur électrique du système de freinage, une décélération de véhicule en mode générateur (a_{gen}) égale à la décélération de véhicule théorique (a_{driver}) demandée est réalisable ; et
le cas échéant, piloter le moteur électrique de telle sorte que la décélération de véhicule en mode générateur (a_{gen}) égale à la décélération de véhicule théorique (a_{driver}) demandée est réalisée, et piloter les soupapes (32a, 32b, 34a, 34b, 36a, 36b, 38a, 38b) des deux circuits de freinage (10, 12) de telle sorte qu'un liquide de frein déplacé du maître-cylindre de frein (18) dans les chambres d'accumulation (46a, 46b) des deux circuits de freinage (10, 12) est déplacé de telle sorte qu'une pression de freinage dans chaque cylindre de frein de roue (14a, 14b, 16a, 16b) des deux circuits de freinage (10, 12) est au maximum égale à une pression de réponse de la chambre d'accumulation (46a, 46b) du circuit de freinage (10, 12) respectif ;
dans lequel il est déterminé en outre si une faisabilité actuelle du mode récupération du système de freinage est retardée ou interrompue au moins temporairement pendant un intervalle de temps (Δt) ;
**caractérisé par** les étapes consistant à
déterminer si un embrayage du véhicule est ouvert, si un temps intermédiaire entre un actionnement d'une pédale d'accélérateur du véhicule et l'actionnement consécutif de l'élément d'actionnement de frein (22) est inférieur à un temps minimum spécifié, si une vitesse actuelle du véhicule est supérieure à une vitesse maximale jusqu'à laquelle le mode récupération du système de freinage est réalisable, et/ou si un changement de vitesse est effectué, et le cas échéant, il est constaté qu'une faisabilité actuelle du mode récupération du système de freinage est retardée ou interrompue pendant un intervalle de temps (Δt) d'un maximum de deux secondes, et
dans la mesure où une faisabilité actuelle du mode récupération du système de freinage est retardée ou interrompue pendant un intervalle de temps (Δt) d'un maximum de deux secondes, au moins les soupapes (32a, 32b, 34a, 34b, 36a, 36b, 38a, 38b) des deux circuits de freinage (10, 12) sont pilotées de telle sorte qu'au moins une première décélération hydraulique de véhicule (a_{hyd1}), provoquée au moyen des premiers cylindres de frein de roue (14a, 14b) des deux circuits de freinage (10, 12), est augmentée.

7. Procédé selon la revendication 6, dans lequel, dans la mesure où une faisabilité actuelle du mode récupération du système de freinage est retardée ou interrompue pendant un intervalle de temps (Δt) d'un maximum de deux secondes, au moins les soupapes (32a, 32b, 34a, 34b, 36a, 36b, 38a, 38b) des deux circuits de freinage (10, 12) sont pilotées de telle sorte qu'au moins dans la mesure où la décélération de véhicule théorique (a_{driver}) demandée est inférieure à une décélération limite spécifiée (a_{threshold}) , la décélération hydraulique de véhicule (a_{hyd1}), provoquée au moyen des premiers cylindres de frein de roue (14a, 14b) des deux circuits de freinage (10, 12), est augmentée jusqu'à la décélération de véhicule théorique (a_{driver}), alors qu'une pression de freinage (p2) dans chaque deuxième cylindre de frein de roue (16a, 16b) des deux circuits de freinage (10, 12) est au maximum égale à la pression de réponse de la chambre d'accumulation (46a, 46b) du circuit de freinage (10, 12) respectif.

8. Procédé selon la revendication 7, dans lequel, dans la mesure où une faisabilité actuelle du mode récupération du système de freinage est retardée ou interrompue pendant un intervalle de temps (Δt) d'un maximum de deux secondes, au moins les soupapes (32a, 32b, 34a, 34b, 36a, 36b, 38a, 38b) des deux circuits de freinage (10, 12) sont pilotées de telle sorte que, dans la mesure où la décélération de véhicule théorique (a_{driver}) demandée est supérieure à la décélération limite spécifiée (a_{threshold}), la pression de freinage (p2) dans chaque deuxième cylindre de frein de roue (16a, 16b) des deux circuits de freinage (10, 12) est également augmentée au-dessus de la pression de réponse de la chambre d'accumulation (46a, 46b) du circuit de freinage (10, 12) respectif, et une somme de la première décélération hydraulique de véhicule (a_{hyd1}) provoquée au moyen des premiers cylindres de frein de roue (14a, 14b) des deux circuits de freinage (10, 12) et d'une deuxième décélération hydraulique de véhicule (a_{hyd2}) provoquée au moyen des deuxièmes cylindre de frein de roue (16a, 16b) des deux circuits de freinage (10, 12) est augmentée jusqu'à la décélération de véhicule théorique (a_{driver}).

9. Procédé selon la revendication 6, dans lequel, dans la mesure où une faisabilité actuelle du mode récupération du système de freinage est retardée ou interrompue pendant un intervalle de temps (Δt) d'un maximum de deux secondes, au moins les soupapes (32a, 32b, 34a, 34b, 36a, 36b, 38a, 38b) des deux circuits de freinage (10, 12) sont pilotées de telle sorte qu'au moins une pression de freinage (p1) dans chaque premier cylindre de frein de roue (14a, 14b) des deux circuits de freinage (10, 12) est augmentée jusqu'à une pression de freinage de rodage (p_{driver}) provoquée par le conducteur dans le maître-cylindre de frein (18).

10. Procédé selon l'une quelconque des revendications 6 à 9, dans lequel on fait fonctionner le système de freinage dont les premiers cylindres de frein de roue (14a, 14b) des deux circuits de freinage (10, 12) sont associés à un essieu avant du véhicule, et dont les deuxièmes cylindres de frein de roue (16a, 16b) des deux circuits de freinage (10, 12) sont associés à un essieu arrière du véhicule.
